# FASCICULE DE BREVET EUROPEEN

(11) **EP 2 702 888 B1**
(45) Date de publication et mention de la délivrance du brevet: **30.12.2015**
(21) Numéro de dépôt: 13179535.3
(22) Date de dépôt: 07.08.2013
(51) Int. Cl.: A43B 5/14, B62M 3/08

(54) **Plaque de liaison rapide d'une chaussure de cycliste sur une pédale automatique de cycle**
Schnellverbindungsplatte eines Radfahrerschuhs auf einem Automatik-Fahrradpedal
Plate for quick linking of a cycling shoe to an automatic cycle pedal

(30) Priorité: 30.08.2012 FR 1258125
(43) Date de publication de la demande: 05.03.2014
(73) Titulaire: Look Cycle International, 58000 Nevers (FR)
(72) Inventeur: Egea, Victor, 58000 Nevers (FR)
(74) Mandataire: Laget, Jean-Loup

(56) Documents cités:
- EP-A1- 0 424 210
- EP-A2- 0 146 454
- US-A- 5 423 233

## Description

La présente invention concerne une plaque de liaison rapide d'une chaussure de cycliste sur une pédale automatique de cycle.

La plaque de liaison rapide est fixée sous la semelle d'une chaussure de cycliste et comporte dans ce but des trous de fixation pour être fixée par vis.

Chaque plaque de liaison comporte un organe d'accrochage avant sous forme d'une saillie avant devant être insérée sous un organe d'accrochage avant de la pédale automatique, et un organe d'accrochage arrière sous forme d'une saillie arrière devant être sollicitée contre un organe d'accrochage arrière mobile de la pédale automatique. En général, ce dernier est monté basculant et est précontraint par un moyen élastique qui habituellement est constitué d'au moins un ressort. La saillie arrière de la plaque de liaison fait ainsi basculer l'organe d'accrochage arrière de la pédale en arrière pour venir se loger sous celui-ci.

La plaque de liaison présente une surface de serrage avant et une surface de serrage arrière prévues sur le chant avant respectivement arrière de la plaque et qui sont serrées entre les organes d'accrochage avant et arrière de la pédale.

Les pédales automatiques équipent des cycles utilisés aussi bien sur la route que sur les chemins ou dans les bois, sur des terrains boueux ou enneigés. Les pédales automatiques sont conçues pour être adaptées au milieu d'utilisation. Ainsi, il y a deux catégories principales de pédales automatiques, à savoir les pédales automatiques de route et les pédales automatiques tout terrain (VTT), adaptées pour être utilisées sur des cycles d'une conception correspondante.

Les pédales automatiques de route coopèrent généralement avec de grandes plaques de liaison rapide en matière plastique qui offrent une surface d'appui contre la pédale la plus grande possible. Ces plaques de liaison sont fixées sur des semelles de chaussures de route à surface plate et relativement rigide.

Il en est autrement des pédales automatiques tout terrain qui sont associées à des petites plaques de liaison en métal fixées sur des semelles de chaussures pour usage tout terrain qui sont munies de crampons généralement disposés de part et d'autre de la plaque de liaison et aussi devant celle-ci. De cette manière, la plaque de liaison se trouve en quelque sorte encastrée dans la semelle. Ce dispositif permet ainsi la marche à pied et les plaques de liaison s'usent le moins possible sur des surfaces abrasives comme des rochers.

Les plaques de liaison selon l'invention concernent tout particulièrement les plaques destinées à une utilisation tout terrain.

Lors de la pratique d'un cycle tout terrain pourvu de l'équipement correspondant en ce qui concerne les chaussures et les plaques de liaison, il est courant de poser un pied à terre pendant une perte d'équilibre. Lorsque le sol est boueux ou enneigé, de la terre ou de la neige pénètre alors dans les orifices des plaques de liaison et dans les mécanismes des pédales.

C'est la raison pour laquelle les pédales tout terrain sont conçues de manière à pouvoir évacuer la boue ou la neige d'une manière optimale. Sur ces pédales tout terrain, les plaques de liaison sont accrochées aux pédales à l'aide d'organes d'accrochage sous forme d'arceaux ou de tôles pliées qui apportent une structure très ouverte aux pédales, ce qui permet l'évacuation de la boue qui alors passe par les nombreuses ouvertures de part et d'autre de l'axe de pédale. La forme en arceau est à préférer pour l'obtention d'une structure ajourée laissant facilement passer la boue ou la neige.

Ainsi, tous les moyens d'évacuation de boue se trouvent sur les pédales, alors que les plaques de liaison d'aujourd'hui ne contribuent pas à pallier les effets de ce problème lié à l'accumulation de boue ou de neige.

Plus précisément, on néglige le fait que des matières externes, par la suite appelées « boue », peuvent pénétrer dans l'interstice formé entre la semelle de la chaussure et les organes d'accrochage avant et arrière de la plaque. Cependant, une accumulation de boue dans ces endroits est susceptible de gêner le cycliste quand il doit rechausser.

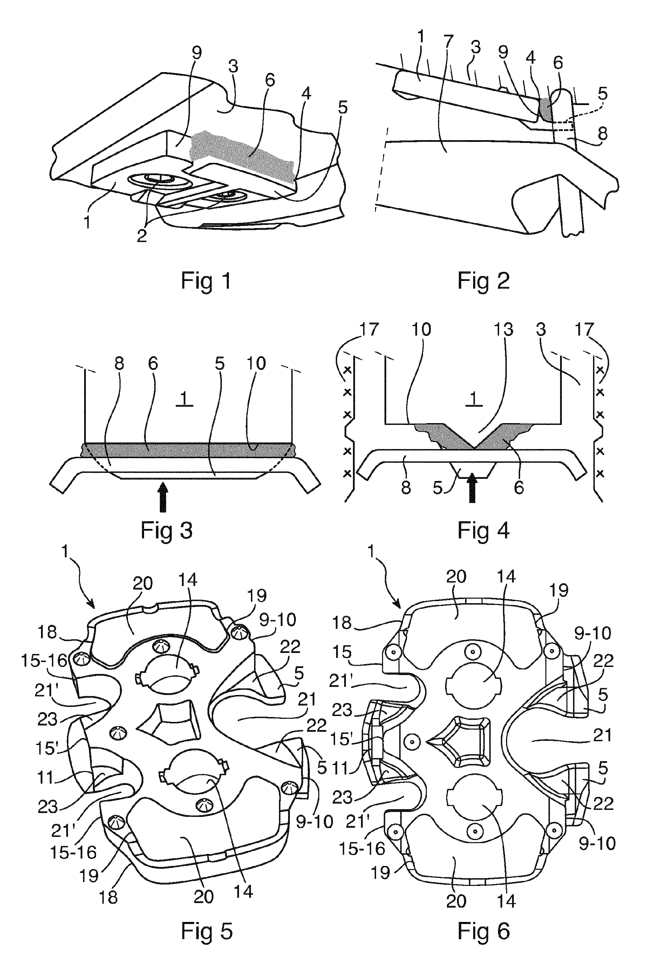

Les figures 1 à 4 sont destinées à illustrer le problème d'accumulation de boue entre les organes d'accrochage avant et arrière de la plaque de liaison et la semelle de la chaussure de cycliste. Les figures 1 et 2 montrent une plaque de liaison 1 fixée par des vis 2 sous la semelle 3 d'une chaussure de cycliste (non représentée).

Les figures 1 et 2 illustrent comment l'interstice 4 entre un organe d'accrochage avant 5 de la plaque de liaison 1 et la semelle 3 est rempli par de la boue 6. Les figures 2 et 3 illustrent ce qui peut se passer lors de l'accrochage de la plaque de liaison 1 sur une pédale automatique 7. Pour accrocher la plaque de liaison 1 sur la pédale 7, l'organe d'accrochage avant 5 de la plaque est d'abord rapproché de l'organe d'accrochage avant 8, ici sous forme d'un arceau, de la pédale 7 pour être inséré sous celui-ci de sorte qu'une surface de serrage 9 prévue sur le chant avant 10 de la plaque de liaison 1 vienne buter contre l'organe d'accrochage avant 8 de la pédale.

Cependant, lors de cette phase initiale de l'accrochage, l'organe d'accrochage avant 8 de la pédale 7 exerce une force de réaction (illustré par une flèche aux figures 3 et 4) qui vient tasser la boue qui restera entre la surface de serrage 9 de la plaque de liaison et l'organe d'accrochage avant 8 de la pédale.

La boue restera prisonnière dans l'interstice 4 entre la semelle 3 et l'organe d'accrochage avant 5 de la plaque de liaison 1 et par la suite, le chaussage deviendra de plus en plus difficile au fur et à mesure que la boue s'entasse à cet endroit.

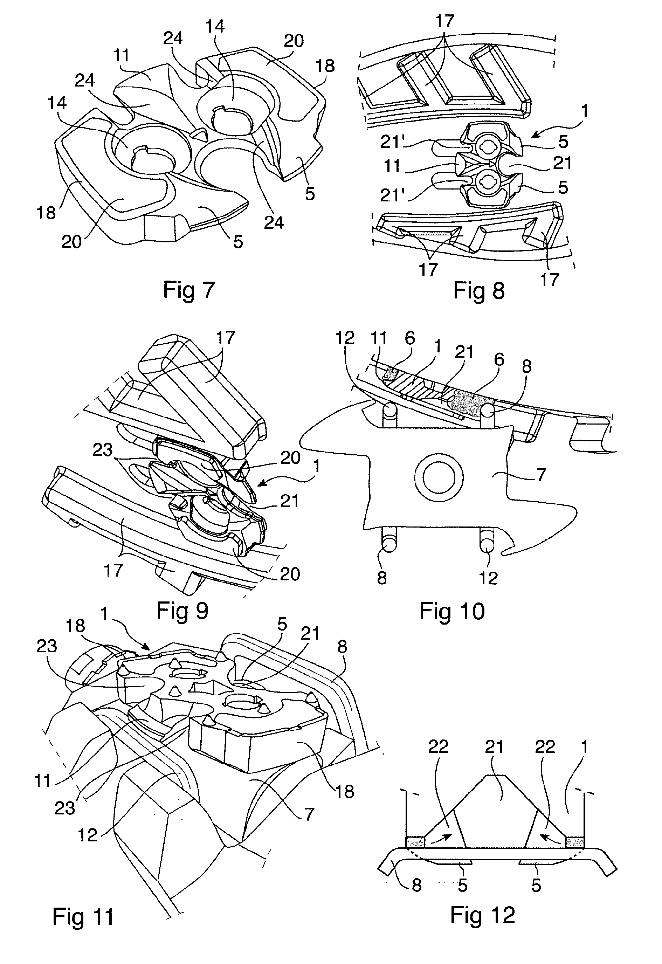

Un phénomène analogue se produira au niveau de l'organe d'accrochage arrière 11 de la plaque de liaison 1 et de l'organe d'accrochage arrière 12 de la pédale automatique 7 (voir figure 10).

Finalement, la figure 4 illustre schématiquement la partie avant d'une plaque de liaison connue 1 dans laquelle le chant avant 10 de la plaque présente une pointe centrale 13 contre laquelle l'organe d'accrochage avant 8 de la pédale exerce sa force. Cette pointe 13 sert également à chasser la boue 6 de part et d'autre par ses bords formant angle. Cependant, cette pointe n'a pratiquement aucun effet pour l'évacuation de la boue puisqu'elle ne peut déplacer qu'une toute petite partie de la boue vers les côtés.

Une plaque selon le préambule de la revendication 1 est connue du document EP 0 424 210.

Le but de l'invention est de proposer une plaque de liaison permettant de facilement évacuer la boue qui autrement s'entassera dans l'interstice entre la semelle et les organes d'accrochage avant et arrière de la plaque.

L'objet de l'invention est une plaque de liaison rapide d'une chaussure de cycliste sur une pédale automatique de cycle telle que définie par la revendication 1. Selon d'autres caractéristiques de l'invention :
- une encoche formant ouverture d'évacuation unique placée au centre du chant avant fractionne l'organe d'accrochage avant de la plaque en deux parties ;
- la plaque présente à l'endroit de l'organe s'accrochage avant une partie à contour dirigé vers l'intérieur de sorte que la face de chaque partie de l'organe d'accrochage avant devant être tournée vers la semelle de la chaussure forme avec celle-ci un canal d'évacuation communiquant avec ladite encoche formant ouverture d'évacuation ;
- deux encoches formant ouverture d'évacuation disposées de part et d'autre de l'organe d'accrochage arrière de la plaque fractionnent la surface de serrage arrière en trois parties ;
- la plaque présente de part et d'autre d'une surface de serrage centrale à l'endroit de l'organe d'accrochage arrière une partie à contour en prolongement du contour de l'encoche respective et reliée à la surface de serrage centrale de sorte que la face d'une partie de l'organe d'accrochage arrière devant être tournée vers la semelle de la chaussure et disposée de part et d'autre de ladite surface de serrage centrale forme avec la semelle de la chaussure un canal d'évacuation communiquant avec une encoche respective formant ouverture d'évacuation ;
- un enfoncement de répartition est formé autour de chaque encoche formant ouverture d'évacuation sur la face de la plaque devant être tournée vers la pédale ;
- lesdits enfoncements communiquent les uns avec les autres ;
- le fond de chaque encoche formant ouverture d'évacuation présente une forme arrondie ; et
l'organe d'accrochage avant est apte à coopérer avec un organe d'accrochage avant en arceau d'une pédale automatique de cycle, et l'organe d'accrochage arrière est apte à coopérer avec un organe d'accrochage arrière en arceau. D'autres caractéristiques et avantages de l'invention ressortiront de la description qui va suivre d'un mode de réalisation non limitatif de l'invention, en référence aux figures annexées dans lesquelles :
- les figures 1 à 4 illustrent les inconvénients des plaques de liaison connues décrites dans l'introduction ;
- la figure 5 est une vue en perspective de dessus d'une plaque de liaison selon l'invention ;
- la figure 6 est une vue de dessus de la plaque de la figure 5,
- la figure 7 est une vue en perspective de dessous d'une plaque de liaison selon l'invention ;
- les figures 8 et 9 sont des vues partielles de dessous respectivement en perspective d'une semelle d'une chaussure de cycliste portant une plaque de liaison selon l'invention ;
- la figure 10 est une vue latérale schématique partiellement en coupe illustrant la phase initiale de l'accrochage de la plaque de liaison selon l'invention fixée sous une semelle ;
- la figure 11 est une vue en perspective partielle montrant la plaque de liaison selon l'invention en phase d'accrochage, la semelle ayant été enlevée pour plus de clarté ; et
- la figure 12 est une vue schématique illustrant le fonctionnement de la plaque de liaison selon l'invention pour évacuer la boue lors de son accrochage sur la pédale automatique.

Dans les figures, les éléments identiques ou équivalents porteront les mêmes signes de référence.

La plaque de liaison 1 selon l'invention illustrée aux figures 1 à 12 comporte de manière classique des trous traversant de fixation 14 de la plaque de liaison sous la semelle 3 d'une chaussure de cycliste (non représentée), un organe d'accrochage avant 5 apte à coopérer avec un organe d'accrochage avant 8 d'une pédale automatique de cycle 7, et un organe d'accrochage arrière 11 apte à coopérer avec un organe d'accrochage arrière 12 de la pédale. Dans sa position enclenchée sur la pédale, la plaque de liaison 1 se trouve serrée entre les organes d'accrochage avant et arrière 8, 12 de la pédale qui prennent appui contre une surface de serrage avant 9 et une surface de serrage arrière 15 prévues sur le chant avant 10 respectivement arrière 16 de la plaque 1.

La semelle 3 est par ailleurs pourvue de rangées de crampons 17 disposés de part et d'autre de la plaque de liaison 1 de sorte que celle-ci se trouve pratiquement intégrée dans la semelle.

En outre, la plaque de liaison selon l'invention illustrée sur les figures comporte sur deux ailes latérales opposées 18 un logement respectif 19 de réception d'un bloc élastique 20 qui fait légèrement saillie vers le bas pour servir de surface d'appui pour la marche en complément aux crampons 17 lorsque le cycliste a déchaussé.

Selon l'invention, au moins une des surfaces de serrage avant et arrière 10, 15 de la plaque de liaison 1 est fractionnée en plusieurs parties par au moins une encoche formant ouverture d'évacuation 21 de matières extérieures 6 susceptibles de pénétrer dans un interstice 4 formé entre la semelle 3 de la chaussure et les organes d'accrochage avant et arrière 5, 11 de la plaque. L'encoche formant ouverture d'évacuation 21 est une encoche traversante s'étendant sur toute l'épaisseur de la plaque de liaison d'une face supérieure à une face inférieure de celle-ci, en laissant passer la boue vers la face inférieure pour son évacuation vers la pédale.

Ce fractionnement de la surface de serrage avant et/ou arrière 10, 15 a pour conséquence directe que cette surface se trouve réduite, ce qui entraînera premièrement une réduction de la surface sur le chant 10 et/ou 15 contre laquelle la boue 6 peut être sollicitée par l'organe d'accrochage correspondant de la pédale, et deuxièmement une augmentation de la pression que celui-ci exerce sur la boue accumulée (voir figure 12). La boue 6 sera ainsi forcée vers l'encoche formant ouverture d'évacuation 21.

Dans l'exemple illustré sur les figures, une encoche unique formant ouverture d'évacuation 21 est placée au centre du chant avant 10 de la plaque de manière à fractionner l'organe d'accrochage avant 5 en deux parties.

La plaque de liaison 1 présente à l'endroit de l'organe d'accrochage avant 5 une partie à contour dirigé vers l'intérieur de sorte que la face de chaque partie de l'organe d'accrochage avant devant être tournée vers la semelle de la chaussure forme avec celle-ci un canal d'évacuation 22 communiquant avec l'encoche centrale 21 formant ouverture d'évacuation.

Egalement dans l'exemple illustré, deux encoches formant ouverture d'évacuation 21' et qui sont disposées de part et d'autre de l'organe d'accrochage arrière 11 de la plaque fractionnent la surface de serrage arrière en trois parties.

La plaque de liaison 1 présente ici de part et d'autre d'une surface de serrage centrale 15' à l'endroit de l'organe d'accrochage arrière 11 une partie à contour en prolongement du contour de l'encoche respective 21' qui est reliée à la surface de serrage centrale 15' de sorte que la face d'une partie de l'organe d'accrochage arrière 11 devant être tournée vers la semelle 3 de la chaussure et disposée de part et d'autre de ladite surface de serrage centrale forme avec la semelle de la chaussure un canal d'évacuation 23 communiquant avec une encoche respective 21'.

La configuration décrite avec une encoche centrale avant 21 et deux encoches latérales arrière 21' semble être une solution optimale pour l'évacuation de la boue autrement emprisonnée et compactée dans l'interstice 4.

Il est évident que toutes les combinaisons sont envisageables sans pour autant sortir du cadre de l'invention.

Par ailleurs, la plaque de liaison 1 est avantageusement sur sa face devant être tournée vers la pédale pourvue, autour de chaque encoche formant ouverture d'évacuation 21, 21', d'un enfoncement de répartition 24 de la boue qui est expulsée par l'encoche correspondante.

Avantageusement, ces enfoncements de répartition 24 communiquent les unes avec les autres.

Finalement, le fond de chaque encoche formant ouverture d'évacuation 21, 21' est arrondie.

Bien entendu, l'invention n'est pas limitée à l'exemple illustré et décrit, mais peut être appliquée à une plaque de liaison quelconque pour une pédale automatique.

## Revendications

1. Plaque de liaison rapide d'une chaussure de cycliste sur une pédale automatique de cycle (7), comportant des trous de fixation (14) de la plaque (1) sous la semelle (3) d'une chaussure de cycliste, un organe d'accrochage avant (5) apte à coopérer avec un organe d'accrochage avant (8) d'une pédale automatique de cycle (7), et un organe d'accrochage arrière (11) apte à coopérer avec un organe d'accrochage arrière (12) de la pédale de manière à serrer la plaque (1) entre lesdits organes d'accrochage avant et arrière (8, 12) de la pédale qui prennent appui contre une surface de serrage avant (9) et une surface de serrage arrière (15, 15') prévues sur le chant avant (10) respectivement arrière (16) de la plaque (1), au moins une desdites surfaces de serrage avant (9) et arrière (15) étant fractionnée en plusieurs parties par au moins une encoche (21, 21') s'étendant sur toute l'épaisseur de la plaque de liaison, d'une face supérieure à une face inférieure de celle-ci, en y formant une ouverture d'évacuation vers ladite face inférieure de matières extérieures susceptibles de pénétrer dans un interstice (4) formé entre la semelle (3) de la chaussure et les organes d'accrochage avant (5) et arrière (11) de la plaque, **caractérisée en ce qu'**une encoche (21) formant ouverture d'évacuation unique placée au centre d'un des chants avant (10) ou arrière (16) fractionne l'organe d'accrochage avant ou arrière correspondant (5 ; 11) de la plaque en deux parties.

2. Plaque de liaison rapide selon la revendication 1, **caractérisée en ce que** la plaque (1) présente à l'endroit dudit organe d'accrochage avant ou arrière correspondant (5 ; 11) une partie à contour dirigé vers l'intérieur de sorte que la face de chaque partie dudit organe d'accrochage avant ou arrière correspondant (5 ; 11) devant être tournée vers la semelle de la chaussure forme avec celle-ci un canal d'évacuation (22) communiquant avec ladite encoche formant ouverture d'évacuation (21).

3. Plaque de liaison rapide selon la revendication 1, **caractérisée en ce que** deux encoches formant ouverture d'évacuation (21') disposées de part et d'autre de l'autre organe d'accrochage arrière (11) ou avant (5) de la plaque fractionnent la surface de serrage arrière en trois parties (15, 15').

4. Plaque de liaison rapide selon la revendication 3, **caractérisée en ce que** la plaque (1) présente de part et d'autre d'une surface de serrage centrale (15') à l'endroit dudit autre organe d'accrochage arrière (11) ou avant une partie à contour en prolongement du contour de l'encoche respective (21') et reliée à la surface de serrage centrale (15') de sorte que la face d'une partie dudit autre organe d'accrochage arrière ou avant devant être tournée vers la semelle de la chaussure et disposée de part et d'autre de ladite surface de serrage centrale forme avec la semelle de la chaussure un canal d'évacuation (23) communiquant avec une encoche respective formant ouverture d'évacuation (21').

5. Plaque de liaison rapide selon l'une quelconque des revendications précédentes, **caractérisée en ce qu'**un enfoncement de répartition (24) est formé autour de chaque encoche formant ouverture d'évacuation (21, 21') sur la face de la plaque devant être tournée vers la pédale (7).

6. Plaque de liaison rapide selon la revendication 5, **caractérisée en ce que** lesdits enfoncements de répartition (24) communiquent les uns avec les autres.

7. Plaque de liaison rapide selon l'une quelconque des revendications précédente, **caractérisée en ce que** le fond de chaque encoche formant ouverture d'évacuation (21, 21') présente une forme arrondie.

8. Plaque de liaison rapide selon l'une quelconque des revendications précédentes, **caractérisée en ce que** l'organe d'accrochage avant (5) est apte à coopérer avec un organe d'accrochage avant en arceau (8) d'une pédale automatique de cycle (7), et l'organe d'accrochage arrière (11) est apte à coopérer avec un organe d'accrochage arrière en arceau (12).

## Patentansprüche

1. Schnellverbindungsplatte eines Radfahrerschuhs auf einem Automatik-Fahrradpedal (7), die Befestigungslöcher (14) der Platte (1) unter der Sohle (3) eines Radfahrerschuhs, ein vorderes Verankerungsorgan (5), das imstande ist, mit einem vorderen Verankerungsorgan (8) eines Automatik-Fahrradpedals (7) zusammenzuarbeiten und ein hinteres Verankerungsorgan (11), das imstande ist, mit einem hinteren Verankerungsorgan (12) des Pedals derart zusammenzuarbeiten, dass die Platte (1) zwischen dem vorderen und hinteren Verankerungsorganen (8, 12) des Pedals, die sich auf einer vorderen Spannfläche (9) und einer hinteren Spannfläche (15, 15') abstützen, die auf der vorderen (10) beziehungsweise hinteren Schmalseite (16) der Platte (1) vorgesehen sind, gespannt wird, aufweist, wobei mindestens eine der vorderen (9) und hinteren Spannflächen (15) von mindestens einer Kerbe (21, 21'), die sich über die gesamte Stärkte der Verbindungsplatte von einer Oberseite bis zu einer Unterseite derselben erstreckt, in mehrere Teile unterteilt ist, wobei sie dort eine Ableitungsöffnung in Richtung der Unterseite von Materialien von außen bildet, die in einen Spalt (4) zwischen der Sohle (3) des Schuhs und dem vorderen (5) und hinteren (11) Verankerungsorgan eindringen könnten, **dadurch gekennzeichnet, dass** eine Kerbe (21), die eine einzige Ableitungsöffnung im Zentrum einer der vorderen (10) oder hinteren Schmalseiten (16) bildet, das entsprechende vordere oder hintere Verankerungsorgan (5; 11) der Platte in zwei Teile unterteilt.

2. Schnellverbindungsplatte nach Anspruch 1, **dadurch gekennzeichnet, dass** die Platte (1) an der Stelle des vorderen oder hinteren Verankerungsorgans (5; 11) einen Teil mit nach innen zeigender Kontur aufweist, so dass die Seite jedes Teils des entsprechenden vorderen oder hinteren Verankerungsorgan (5; 11), die in Richtung der Sohle des Schuhs zeigen muss, mit dieser einen Ableitungskanal (22) bildet, der mit der eine Ableitungsöffnung (21) bildenden Kerbe kommuniziert.

3. Schnellverbindungsplatte nach Anspruch 1, **dadurch gekennzeichnet, dass** zwei Kerben, die eine Ableitungsöffnung (21') bilden, die auf der einen und der anderen Seite des hinteren (11) oder vorderen Verankerungsorgans (5) der Platte angeordnet sind, die hintere Spannfläche in drei Teile (15, 15') unterteilen.

4. Schnellverbindungsplatte nach Anspruch 3, **dadurch gekennzeichnet, dass** die Platte (1) auf der einen und der anderen Seit einer zentralen Spannfläche (15') an der Stelle des anderen hinteren (11) oder vorderen Verankerungsorgans einen Teil mit Kontur in Verlängerung der Kontur der jeweiligen Kerbe (21') aufweist, der mit der zentralen Spannfläche (15') derart verbunden ist, dass die Seite eines Teils des anderen hinteren oder vorderen Verankerungsorgans, das zur Sohle des Schuhs zeigen muss und auf der einen und der anderen Seite der zentralen Spannfläche angeordnet ist, mit der Sohle des Schuhs einen Ableitungskanal (23) bildet, der mit einer jeweiligen, eine Ableitungsöffnung (21') bildenden Kerbe kommuniziert.

5. Schnellverbindungsplatte nach einem der vorangehenden Ansprüche, **dadurch gekennzeichnet, dass** um jede eine Ableitungsöffnung (21, 21') bildende Kerbe auf der Seite der Platte, die in Richtung des Pedals (7) zeigen muss, eine Unterteilungseinbuchtung (24) gebildet ist.

6. Schnellverbindungsplatte nach Anspruch 5, **dadurch gekennzeichnet, dass** die Unterteilungseinbuchtungen (24) miteinander kommunizieren.

7. Schnellverbindungsplatte nach einem der vorangehenden Ansprüche, **dadurch gekennzeichnet, dass** der Boden jeder eine Ableitungsöffnung (21, 21') bildenden Kerbe eine abgerundete Form aufweist.

8. Schnellverbindungsplatte nach einem der vorangehenden Ansprüche, **dadurch gekennzeichnet, dass** das vordere Verankerungsorgan (5) imstande ist, mit einem vorderen bogenförmigen Verankerungsorgan (8) eines Automatik-Fahrradpedals (7) zusammenzuarbeiten, und dass das hintere Verankerungsorgan (11) imstande ist, mit einem hinteren bogenförmigen Verankerungsorgan (12) zusammenzuarbeiten.

## Claims

1. A quick connecting plate of a cyclist's shoe on an automatic cycle pedal (7), including fastening holes (14) for fastening the plate (1) below the sole (3) of a cyclist's shoe, a front attaching member (5) able to cooperate with a front attaching member (8) of an automatic cycle pedal (7), and a rear attaching member (11) able to cooperate with a rear attaching member (12) of the pedal so as to grip the pedal (1) between said front and rear attaching members (8, 12) of the pedal, which bear against a front gripping surface (9) and a rear gripping surface (15, 15') provided on the front edge (10) or rear edge (16), respectively, of the plate (1), at least one of said front (9) and rear (15) gripping surfaces being split into several parts by at least one notch (21, 21') extending over the entire thickness of the connecting plate, from an upper face to a lower face thereof, forming a discharge opening therein toward the lower face for outside materials that may penetrate an interstitial space (4) formed between the sole (3) of the shoe and the front (5) and rear (11) attaching members of the plate, **characterized in that** a notch (21) forming a single discharge opening placed at the center of one of the front (10) or rear (16) edges splits the corresponding front or rear attaching member (5; 11) of the plate into two parts.

2. The quick connecting plate according to claim 1, **characterized in that** the plate (1) has, at said corresponding front or rear attaching member (5; 11), a part with a contour oriented inward such that each part of said corresponding front or rear attaching member (5; 11) needing to be turned toward the sole of the shoe forms, with the latter, a discharge channel (22) communicating with said notch forming a discharge opening (21).

3. The quick connecting plate according to claim 1, **characterized in that** two notches forming a discharge opening (21') positioned on either side of the rear (11) or front (5) attaching member of the plate split the rear gripping surface into three parts (15, 15').

4. The quick connecting plate according to claim 3, **characterized in that** the plate (1) has, on either side of a central gripping surface (15') at said other rear (11) or front attaching member, a contoured part in the extension of the contour of the respective notch (21') and connected to the central gripping surface (15') such that the face of part of said other rear or front attaching member needing to be turned toward the sole of the shoe and positioned on either side of said central gripping surface forms, with the sole of the shoe, a discharge channel (23) communicating with a respective notch forming a discharge opening (21').

5. The quick connecting plate according to any one of the preceding claims, **characterized in that** a distributing recess (24) is formed around each notch forming a discharge opening (21, 21') on the face of the plate needing to be turned toward the pedal (7).

6. The quick connecting plate according to claim 5, **characterized in that** said distributing recesses (24) communicate with one another.

7. The quick connecting plate according to any one of the preceding claims, **characterized in that** the bottom of each notch forming the discharge opening (21, 21') has a rounded shape.

8. The quick connecting plate according to any one of the preceding claims, **characterized in that** the front attaching member (5) is able to cooperate with a bowed front attaching member (8) of an automatic cycle pedal (7), and the rear attaching member (11) is able to cooperate with a bowed rear attaching member (12).
